# EUROPEAN PATENT APPLICATION

(11) **EP 1 318 480 A2**
(43) Date of publication of application: **11.06.2003**
(21) Application number: 02258289.4
(22) Date of filing: 02.12.2002
(51) Int. Cl.: G07B 17/02

(54) **An automated point-of-sale terminal for use in a post office**

(30) Priority: 10.12.2001 US 13077
(71) Applicant: NCR INTERNATIONAL INC., Dayton, Ohio 45479 (US)
(72) Inventor: Taylor, Jason Wayne, Atlanta GA 30340 (US)
(74) Representative: Williamson, Brian

(57) **Abstract**

The invention provides an automated point-of-sale terminal for use in a post office, comprising a processor electrically coupled to each of: an input device operable by a user, a scale for weighing items of postage, a visual display, a payment acceptance device, and an output device adapted to dispense a printed indication of a postal charge having been paid; the processor being configured to: (a) receive input from the input device specifying the characteristics of a postal delivery; (b) receive input from the scale specifying the weight of an object placed thereon; (c) provide output to the visual display to indicate a postal charge for delivering the said object according to the specified postal delivery characteristics; (d) operate the payment acceptance device to receive payment of the said postal charge indicated; and (e) operate the output device to supply a printed indication of the postal charge having been paid. These features may be integrally provided in a single unit. Such apparatus enables the provision of postal services in a post office without the intervention of a postal worker, which advantageously provides a means by which customers can perform basic post office services for themselves.

## Description

This invention relates to an automated point-of-sale terminal for use in a post office.

Queues or lines in post offices, comprising people waiting to interact with a postal employee, are commonplace, and are generally disliked by all concerned. The delay in being served is a potential source of frustration and annoyance to customers. An annoyed customer may take issue with, or even threaten the postal employee who he eventually meets for service. Postal employees are put under stress dealing with extensive queues of disgruntled customers.

Whilst some of the people waiting in such queues require a postal employee to carry out a relatively complex and involved service, many people only require basic counter services, such as the weighing of an item of mail and the purchase of the necessary postage such that the item can be sent to the desired destination. A person in a queue who requires only a basic service may become extremely frustrated if he is being delayed by someone ahead of him who is involving the employee in a lengthy and complex process or transaction. Similarly, someone who requires a complex service may become annoyed by people ahead of him requiring what may be regarded as trivial services.

Accordingly, it is a general object of the present invention to overcome or at least mitigate the problems and shortcomings associated with the post offices as identified above.

According to a first aspect of the invention there is provided an automated point-of-sale terminal for use in a post office, comprising a processor electrically coupled to each of: an input device operable by a user, a scale for weighing items of postage, a visual display, a payment acceptance device, and an output device adapted to dispense a printed indication of a postal charge having been paid; the processor being configured to: (a) receive input from the input device specifying the characteristics of a postal delivery; (b) receive input from the scale specifying the weight of an object placed thereon; (c) provide output to the visual display to indicate a postal charge for delivering the said object according to the specified postal delivery characteristics; (d) operate the payment acceptance device to receive payment of the said postal charge indicated; and (e) operate the output device to supply a printed indication of the postal charge having been paid.

Preferably the automated point-of-sale terminal further comprises an output device adapted to dispense a printed postage label.

Preferably the said output device is adapted to dispense postage stamps.

Preferably the said output device is adapted to print and dispense franked postage labels.

Preferably the said output device is adapted to print and dispense a shipping label.

Preferably the payment acceptance device comprises a cash acceptance and discrimination device.

Preferably the payment acceptance device is adapted to receive a payment card and to execute a transaction therewith.

Preferably the automated point-of-sale terminal further comprises an output device adapted to print and dispense a payment receipt.

Preferably the visual display is a touch sensitive screen.

Particularly preferably, the processor, the input device, the scale, the visual display, the payment acceptance device, and the output device are integral in a single unit.

According to a second aspect of the invention, there is provided an automated point-of-sale terminal for use in a post office, comprising a processor electrically coupled to each of: an input device operable by a user, a scale for weighing items of postage, a visual display, a payment acceptance device, and an output device adapted to dispense a printed indication of a postal charge having been paid; the processor being configured to: (a) receive a signal from the input device representing characteristics of a postal delivery; (b) receive a signal from the scale representing the weight of an object placed thereon; (c) send a signal to the visual display to indicate a postal charge for delivering the said object according to the specified postal delivery characteristics; (d) send a signal to the payment acceptance device to execute payment of the said postal charge indicated; and (e) send a signal to the output device to cause it to supply a printed indication of the postal charge having been paid.

According to a third aspect of the invention, there is provided a method of providing postal services in a post office without the intervention of a postal worker, comprising providing an automated point-of-sale terminal operable by a customer to: (a) specify the characteristics of a postal delivery; (b) weigh an item of postage; (c) accept payment of a postal charge in respect of the postal delivery; and (d) dispense a printed indication that the postal charge has been paid.

By removing the need for customers to wait in line in order to interact with a postal employee in order to perform basic post office tasks, the queues in post offices would be reduced. This would result in fewer disgruntled customers, and staff being placed under less pressure. In the event that fewer postal employees are required to serve customers, the postal service would be able to deploy their staff elsewhere, in more effective roles, or even employ fewer people, thereby saving on payroll costs which may result in reduced postal charges for customers and/or increased profits for the postal service.

Embodiments of the invention will now be described, by way of example, and with reference to the drawings in which:
Figure 1 illustrates a front view of an automated point-of-sale terminal for use in a post office, in accordance with the invention;
Figure 2 illustrates a plan view from above of the automated point-of-sale terminal shown in Figure 1;
Figure 3 is a procedural flow diagram illustrating a user's interaction with the automated point-of-sale terminal; and
Figure 4 is a system architecture diagram illustrating schematically the interconnection of principal components of the automated point-of-sale terminal, and its connection to a telecommunications network.

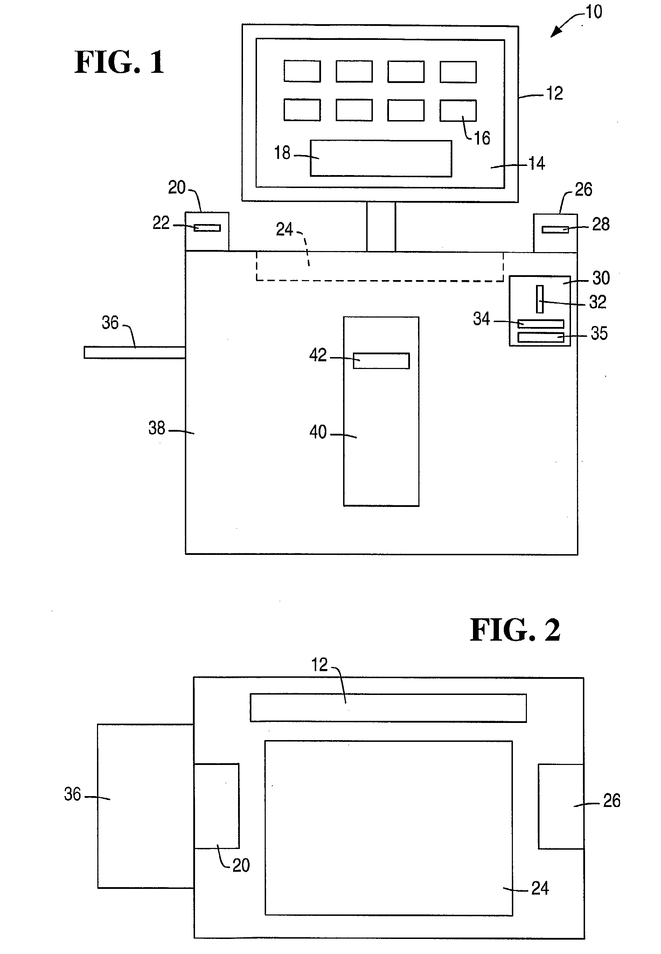

An example of an automated point-of-sale terminal in accordance with the invention is illustrated in Figures 1 and 2. The point-of-sale terminal 10 integrally comprises a video display unit 12 having a display screen 14, mounted on a cabinet unit 38. The cabinet unit 38 itself integrally comprises a postage scale 24, a postage printer 20, a payment card reader 26, a cash acceptance and discrimination device 30, and a payment receipt printer 40. A shelf 36 is also provided for the convenience of the user. It will be appreciated that alternative configurations of these components may readily be used to implement the invention. In particular, the components need not be integrated in a single unit, but may exist as separate components, provided for a customer's use within a post office environment.

Turning now to each of the components in turn:
In a preferred embodiment of the invention, the visual display unit 12 is the NCR 7401 model, in which the display screen 14 is touch-sensitive. However, it will be appreciated that alternative display units having similar functionality may be used instead. Under the control of the internal processor, a plurality of postage and delivery options 16 are displayed on the screen. These options are, for example, the destination of the delivery, the class or category of postage, whether air mail or surface mail is required, whether certified recorded delivery or special delivery is needed, and so on. All the options that would conventionally be offered to a customer by a postal worker may be represented by on-screen icons 16 in such a manner. The user is simply required to touch on the screen 14 in order to select an option of their choice. An option may also be provided for the user to input the delivery address, for printing onto a shipping label as will be discussed below.

A conventional non-touch-sensitive visual display unit may alternatively be used together with user input means such as buttons or a keyboard.

The postage cost in respect of the delivery option selected will depend on the weight of the item of mail being sent. To evaluate this, the point-of-sale terminal integrally comprises a postage scale 24, on which the item to be posted is placed by the user. Upon receiving a signal from the user input device corresponding to the user's selection, and a signal from the postage scale corresponding to the weight of the item of mail placed thereon, the processor calculates the appropriate postage charge and this is displayed on the visual display unit in a clearly designated area 18.

A variety of payment options are offered to the customer. A payment card reader 26 may be provided to read credit or debit cards, which may be inserted via the slot 28. A card reader having a specification broadly similar to that of the NCR 5945 device is suitable for this purpose. Alternatively, for those customers wishing to pay by cash, a cash acceptance and discrimination device 30 may also be provided. This comprises a slot 32 for the acceptance of coins, and a second slot 34 to receive notes or bills. Discrimination devices, as known to those skilled in the art, are provided behind these two slots, and change is issued via the outlet 35.

With respect to the payment card reader 26, the point-of-sale terminal may be permanently connected to a telecommunications network such that the payment card reader may transact with the appropriate banks or credit card companies in a fully automated manner.

Once the payment has been effected, the postage is then dispensed from the terminal via the output slot 22 of the postage dispenser 20. The dispenser 20 may take one or more of a variety of forms. At its simplest, the dispenser may be a conventional stamp dispenser, dispensing postage stamps by way of a continuous ribbon of stamps, with perforations separating each stamp such that they may be detached by the customer. Alternatively, in a more sophisticated embodiment of the invention, the dispenser 20 may issue custom-printed stamps, franked postage labels, or shipping labels featuring the delivery address (as previously inputted by the user) together with an indication of the postage charge having been paid. Direct franking onto an envelope or parcel is also possible.

A receipt for the postage that has been paid is also dispensed, substantially at the same time as the printed postage, by the receipt printer 40 via an output slot 42. A preferred receipt printer is the NCR 7194 thermal receipt printer, or another having substantially similar characteristics.

Once the user has completed his interaction with the automated point-of-sale terminal, he then affixes the printed indication of postage to the item of mail and places it in a designated place within the post office for subsequent collection and delivery by postal workers.

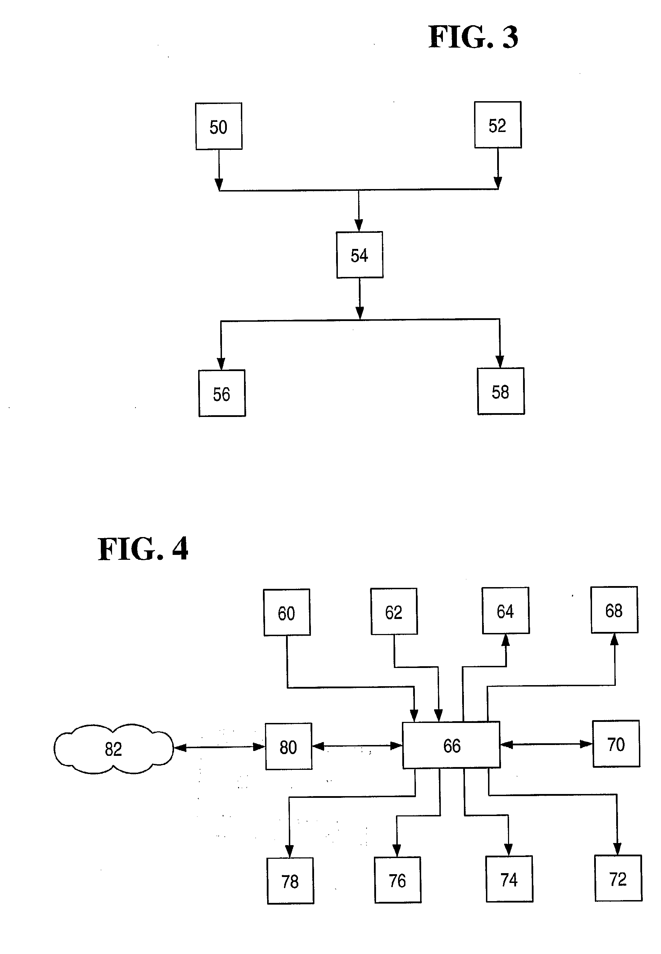

The method of operation of the automated point-of-sale terminal, which, under the control of the processor, may replicate the basic functions of a postal worker, will now be summarized with reference to the procedural flowchart illustrated in Figure 3 and the system architecture diagram shown in Figure 4.

Firstly, the customer uses the scale 60 to weigh the item of mail [box 50], and also specifies the characteristics of the required postal delivery [box 52] by providing input via the user interface 62 in response to options displayed on the visual display unit 64 under the control of the processor 66. The steps of weighing the mail and specifying the delivery characteristics may be performed in either order, or substantially simultaneously.

Signals corresponding to both the parameters of weight and delivery characteristics are then processed by the processor 66, which calculates the payment of postage due. The processor 66 sends a signal to the visual display unit 64 to inform the customer of this payment due. The customer then pays the required postage charge [box 54], either via the payment card reader 68 or the cash discriminator 70, both of which are also controlled by the processor 66. In order to be able to execute credit or debit card transactions automatically without the intervention of a postal worker, the processor 66 is also provided with a connection 80 to a telecommunications network 82, though which digital communication with banks and credit card companies can be conducted and the payment effected.

Once the payment has been effected, the user is automatically issued with a stamp, a franked postage label, or a printed shipping label [box 56], via, respectively, the stamp dispenser 72, the franked postage label printer 74, or the shipping label printer 76. A payment receipt is also issued to the user from the receipt printer 78 [box 58]. It will be appreciated that any combination of the postage delivery devices 72,74,76 may be provided in the point-of-sale terminal, although the functionality of the terminal will be limited as a consequence. Similarly, it is possible to employ only a single payment device - either a payment card reader 68 or a cash discriminator 70 - although having both is desirable in order to optimize the overall usefulness and functionality of the terminal. The connection 80 to the telecommunications network 82 is only required if the payment card reader 68 is included. The receipt printer 78 is also optional. It will also be appreciated by those skilled in the art that additional components - in particular, an electrical power supply, memory and data storage devices - may also be provided as required.

## Claims

1. An automated point-of-sale terminal for use in a post office, comprising a processor electrically coupled to each of: an input device operable by a user, a scale for weighing items of postage, a visual display, a payment acceptance device, and an output device adapted to dispense a printed indication of a postal charge having been paid; the processor being configured to:
(a) receive input from the input device specifying the characteristics of a postal delivery;
(b) receive input from the scale specifying the weight of an object placed thereon;
(c) provide output to the visual display to indicate a postal charge for delivering the said object according to the specified postal delivery characteristics;
(d) operate the payment acceptance device to receive payment of the said postal charge indicated; and
(e) operate the output device to supply a printed indication of the postal charge having been paid.

2. An automated point-of-sale terminal as claimed in Claim 1, further comprising an output device adapted to dispense a printed postage label.

3. An automated point-of-sale terminal as claimed in Claim 2, wherein the said output device is adapted to dispense postage stamps..

4. An automated point-of-sale terminal as claimed in Claim 1, further comprising an output device adapted to print and dispense a payment receipt.

5. An automated point-of-sale terminal as claimed in Claim 1, wherein the visual display is a touch sensitive screen.

6. An automated point-of-sale terminal as claimed in Claim 1, wherein the processor, the input device, the scale, the visual display, the payment acceptance device, and the output device are integral in a single unit.

7. An automated point-of-sale terminal for use in a post office, comprising a processor electrically coupled to each of: an input device operable by a user, a scale for weighing items of postage, a visual display, a payment acceptance device, and an output device adapted to dispense a printed indication of a postal charge having been paid; the processor being configured to:
(a) receive a signal from the input device representing characteristics of a postal delivery;
(b) receive a signal from the scale representing the weight of an object placed thereon;
(c) send a signal to the visual display to indicate a postal charge for delivering the said object according to the specified postal delivery characteristics;
(d) send a signal to the payment acceptance device to execute payment of the said postal charge indicated; and
(e) send a signal to the output device to cause it to supply a printed indication of the postal charge having been paid.

8. A method of providing postal services in a post office without the intervention of a postal worker, comprising providing an automated point-of-sale terminal operable by a customer to:
(a) specify the characteristics of a postal delivery;
(b) weigh an item of postage;
(c) accept payment of a postal charge in respect of the postal delivery; and
(d) dispense a printed indication that the postal charge has been paid.
